# EUROPEAN PATENT APPLICATION

(11) **EP 4 822 140 A1**
(43) Date of publication of application: **14.10.2026**
(21) Application number: 26163973.6
(22) Date of filing: 11.03.2026
(51) Int. Cl.: F01D 5/18

(54) **AERODYNAMIC COMPONENT WITH FILM COOLING PASSAGE FOR A GAS TURBINE**

(30) Priority: 11.04.2025 GB 202505445
(71) Applicant: Rolls-Royce Deutschland Ltd & Co KG, 15827 Blankenfelde-Mahlow (DE); Rolls-Royce plc, London N1 9FX (GB)
(72) Inventor: HEYEN, Sabina, 15827 Blankenfelde-Mahlow (DE); MURPHY, Adrian, 15827 Blankenfelde-Mahlow (DE); KING, Tom, 15827 Blankenfelde-Mahlow (DE); SIKORSKI, Igor, 15827 Blankenfelde-Mahlow (DE)

(57) **Abstract**

An aerodynamic component (100) for a gas turbine (1000). The aerodynamic component (100) has a wall-shaped body (10) with a first surface (22) on a first side (20) of the wall-shaped body (10), and a second surface (26) on a second side (24) of the wall-shaped body (10). The second side (24) is opposite of the first side (20). The wall-shaped body (10) has at least one channel (30) extending from an inlet (32) at the first surface (22) to an outlet (42) at the second surface (26). A bead (60) extends at least partially around a circumference (44) of the outlet (42). The bead (60) protrudes away from the second surface (26).

## Description

### FIELD

The present disclosure relates to gas turbines in general, and aerodynamic components thereof in particular. Such aerodynamic, in particular wall-shaped, components are regularly used in gas turbines, in particular to at least partially separate fluid flows and/or to create flow paths. Examples may include but are not limited to combustor tiles, airfoils, heat shields, vanes, liners and/or turbine blades.

### BACKGROUND

Examples aerodynamic components are disclosed e.g. in EP 3182011A1 and EP 3101231A1.

There is a further need to provide improved aerodynamic components, in particular with respect to their mechanical characteristics and manufacturability, or to at least provide a useful alternative to known aerodynamic components.

### SUMMARY

In accordance with the first aspect of the present disclosure, an aerodynamic component for a gas turbine is proposed, the aerodynamic component comprising a wall-shaped body with a first surface on a first side of the wall-shaped body, and a second surface on a second side of the wall-shaped body, wherein the second side is opposite of the first side, and the wall-shaped body comprises at least one channel extending from an inlet at the first surface to an outlet at the second surface.

It is proposed that the aerodynamic component further comprises a bead extending at least partially around a circumference of the outlet, the bead protruding away from the second surface. The bead may be understood as a thickening applied locally to the second surface at the outlet. The channel may extend along a channel axis.

The bead may contribute to guide the fluid flow at the outlet of the channel, e.g. to form a cooling film on the second surface and/or to minimize turbulence of the fluid exiting the channel. Further, the bead may constitute a mechanical reinforcement of the wall-shaped body, by providing an additional thickness of the wall-shaped body. In other words, the bead will result in extra material in a region of the wall-shaped body between the second surface and the channel. Whilst it is generally beneficial to have fine cooling structures, in particular integrally manufactured into the aerodynamic component, the present disclosure includes the finding that the bead can provide a highly localized reinforcement, without adversely affecting, or even improving, the aerodynamic characteristics.

Further developments of the disclosure can be found in the dependent claims and show particularly advantageous possibilities to realize above-described concept regarding further advantages.

In a development, it is proposed that the second surface is configured to be exposed to a fluid flow with a main flow direction, wherein the bead is arranged on an upstream side of the outlet. The upstream side is located upstream with respect to the main flow direction. The outlet zone may be understood as an area of the second surface adjacent to the outlet, in particular at least in an upstream side of the outlet. Upstream side refers to a main flow direction of a fluid flow on the second side of the wall-shaped body. As the channel may be oriented, at least in sections, partially parallel or at a relatively small angle to the second surface, the wall-shaped body may feature a region of a relatively small material thickness in said outlet zone. By arranging the bead in the outlet zone, the material thickness can be increased, resulting in higher stability and a decreased risk of mechanical failure such as fatigue cracks.

In a further development, it is proposed that the bead is symmetrical with respect to a symmetry plane of the channel. The symmetry plane may be defined with respect to the outlet zone, or only with respect to a region or section on the second side. For example, the aerodynamic component may be configured such that only a section of the channel is symmetrical with respect to a symmetry plane, e.g. only a diffuser section close to the outlet of the channel may be symmetrical. In other developments, the bead and/or the channel may be non-symmetrical.

In a further development of the disclosure, it is proposed that the bead has a bead thickness in a range from 0.1 mm to 1.2 mm, preferably from 0.2 mm to 0.8 mm, more preferably from 0.55 mm to 0.65 mm. These values have been found to significantly increase the mechanical stability. The bead thickness may be 0.6 mm. In developments where the bead thickness is variable, the bead thickness may define a minimum value.

In a further development, it is proposed that the bead thickness is substantially constant at least in an outlet zone at the upstream side of the outlet. This may imply that part of an inner channel surface is substantially parallel to the second surface, in particular in the outlet region, i.e. on an upstream side adjacent to the outlet. In other developments, the bead thickness may vary over the bead length and/or over circumferential extension, e.g. according to an actual mechanical stress profile such that areas exposed to higher stress have a higher bead thickness than areas exposed to lower stress.

In a development of the disclosure, an outlet and/or a diffuser section of the channel is symmetrical with respect to a symmetry plane, wherein in particular a main section of the channel is arranged at a channel angle with respect to the symmetry plane. In other words, The channel angle may be between a channel axis of the main section of the channel may and the symmetry plane.

In a further development, it is proposed that the bead comprises along its circumferential extension at least one, preferably two, three, four, five, six, or seven, straight sections. This results in a polygonal shape, or extension, of the bead. In the case of two straight sections, the resulting bead has a V-shape.

In a further development of the disclosure, the bead may have a bead height, perpendicular to the second surface. The bead height may be in a range from 0.05 mm to 0.8 mm, preferably from 0.1 mm to 0.6 mm, more preferably from 0.25 mm to 0.35 mm. These values have been found to significantly increase the mechanical stability. The bead height may be 0.3 mm. The bead height may be gradually decreasing, in particular to zero, towards one or both circumferential ends of the bead. The bead height may be linearly decreasing, forming the shape of a substantially even ramp, at least in a region of the bead towards the upstream side of the outlet. In other developments, the bead height may be decreasing non-linearly, e.g. the form of a polynomial function, or may form a free-form shape.

In a further development, it is proposed that the bead has a bead length, in particular in the outlet zone, in the range from 0.1 mm to 1.8 mm, preferably from 0.2 mm to 1.5 mm, more preferably from 0.4 mm to 1.2 mm. The bead length may by variable, e.g. changing along the circumferential extension of the bead, and/or may be different for different outlets in an embodiment of the aerodynamic component. The bead may protrude at a bead angle with respect to the second surface.

In a development of the disclosure, the bead may have a circumferential extension in the range from 70° to 280°, preferably 90° to 150°, more preferably 110° to 130°. The circumferential extension may be 120°. The term "circumferential" explicitly includes any shape of outlet or channel cross-section, which may be round, circular, elliptical, polygonal, or any other cross-sectional shape the channel comprises at its intersection with the second surface.

In a development of the disclosure, the bead may extend circumferentially beyond a lateral channel extension over an overlap angle. The circumferential extension of the bead may be defined by an overlap angle. The overlap angle may be defined as the angle to which the circumferential extension extends over a lateral channel extension of the channel, in particular the main section of the channel. The lateral channel extension may be a projection of the channel, in particular the main section of the channel, onto a plane defined by the second surface. In other words: the bead may extend circumferentially further than the lateral extension of the channel, to an extent which is defined by the overlap angle. The outlet zone may be defined as the area adjacent to the outlet (e.g. within the bead length), which is within the lateral channel extension.

The circumferential extension may extend over a lateral channel extension on both sides of the channel, by the same overlap angle, or by different overlap angles. The overlap angle may be in the range from 5° to 45°, preferably 10° to 40°, more preferably between 25° and 35°. A lower boundary for the range of overlap angles may be 5°, 10°, 15°, 20°, 25°, 30°, 35°. An upper boundary for the range of overlap angles may be 20°, 25°, 30°, 35°, 40°, 45°, 50°, 60°, 70°. A sufficient overlap angle may contribute to the structural integrity of the aerodynamic component, as the material thickness (not considering the bead), tends to be small in the outlet zone and/or the area between the channel, in particular main section of the channel, and the second surface. This may further contribute to the prevention of cracks and other fatigue effects.

In a further development of the disclosure, the bead may have a blended edge. The blended edge may extend partially or fully over one or more edges of the bead. The blend may be convex. The blend may extend fully over an upper side of the bead, from an outer surface (in particular the second surface) to an inner channel surface of the channel. Additionally or alternatively, the bead may comprise a further, in particular concave, blend.

In a further development, it is proposed that the bead comprises, at its upstream side, a first straight bead section and a second straight bead section that are arranged at an opening angle in the range from 110° to 200°, preferably 130° to 180°, more preferably 150° to 160°. In particular, the bead may form a V-shape (seen from a vertical direction), at least in one section, in particular a section covering the outlet zone, upstream of the outlet.

In a further development, the aerodynamic component comprises, or is made of, a ceramic or metal material, in particular a nickel-based alloy.

In a further development of the disclosure, it is proposed that the component is manufactured by an additive manufacturing process. Additive manufacturing processes or additive layer manufacturing processes, such as laser bed powder fusion (LBPF) or binder-jetting, are beneficial for creating parts with complex internal structures, such as reinforcement and/or cooling structures, but also external structures and free-form surfaces, whilst enabling to use a wide range of materials, in particular metals and/or ceramics.

In a further development, it is proposed that the second surface is configured to be exposed to hot gases, in particular combustion gases, and/or the first surface is configured to be exposed to a cooling fluid, wherein the at least one channel is a cooling channel. The cooling fluid may be air. The cooling channel may be configured to guide and/or distribute and/or a delay the cooling fluid, in particular such that a cooling film is established on the second surface. The second surface may be considered a hot surface, and the first surface may be considered a cooling surface. The aerodynamic component may be a combustor tile or a part thereof. The aerodynamic component may be a component exposed to hot gases, in particular combustion gases. Such aerodynamic components, which may include a combustor tile, a heat shield, an aerofoil, a vane, a liner and/or a turbine blade, have an increased demand for cooling.

In a second aspect of the disclosure, a gas turbine is proposed, comprising an aerodynamic component according to the first aspect of the disclosure.

It shall be understood that the aerodynamic component according to the first aspect of the disclosure and the gas turbine according to the second aspect of the disclosure may comprise identical or similar developments, in particular as described in the dependent claims. Therefore, a development of one aspect of the disclosure is also applicable to another aspect of the disclosure.

These and other aspects of the disclosure will be apparent from and elucidated with reference to the embodiments described hereinafter. The embodiments of the disclosure are described in the following on the basis of the drawings. It should be borne in mind that numerous modifications and changes can be made to the form and detail of an embodiment without deviating from the general idea of the disclosure. In addition, all combinations of at least two of the features disclosed in the description, drawings and/or claims fall within the scope of the disclosure. The general idea of the disclosure is not limited to the exact form or detail of the embodiments shown and described below, or to an object which would be limited in comparison to the object claimed in the claims. For specified design ranges, values within the specified limits are also disclosed as limit values and thus arbitrarily applicable and claimable.

### BRIEF DESCRIPTION OF THE DRAWINGS

Further advantages, features and details of the disclosure result from the following description of the preferred embodiments as well as from the drawings, which show in:
**FIG. 1** is a detailed view of a first embodiment of an aerodynamic component in the form of a combustor tile;
**FIG. 2** is a cross-sectional view of the first embodiment;
**FIG. 3** is a further view of the first embodiment, showing a plurality of cooling channel outlets arranged on the second surface;
**FIG. 4** is a detailed view of a second embodiment of an aerodynamic component in the form of a further combustor tile, showing a cooling channel outlet arranged on the second surface; and
**FIG. 5** is a schematic cross-sectional view of a gas turbine.

### DETAILED DESCRIPTION

Aspects and embodiments of the present disclosure will now be discussed with reference to the accompanying figures. Further aspects and embodiments will be apparent to those skilled in the art.

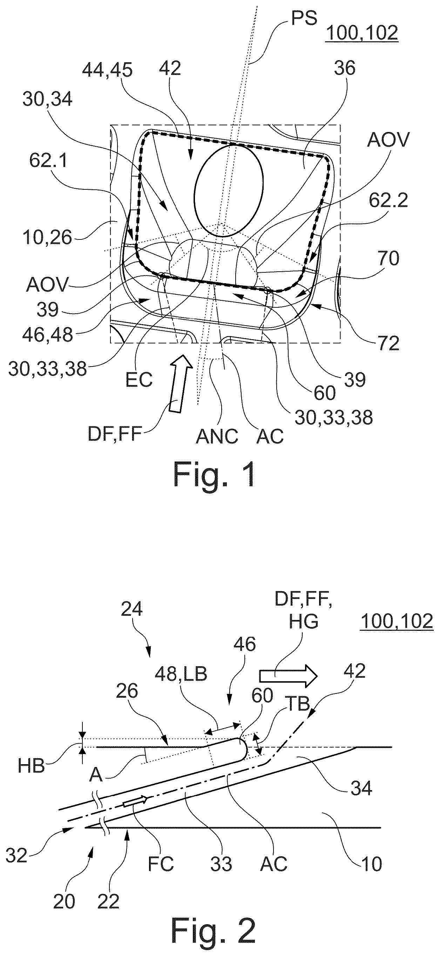

**FIG. 1** shows a view of a first embodiment of an aerodynamic component 100 in the form of a combustor tile 102 for a gas turbine 1000. The combustor tile 102 comprises a wall-shaped body 10. The view is detailed, as only the region of one outlet 42 of a channel 30 is shown, looking towards a second surface of 26 of the wall-shaped body. A diffuser section 34 of the channel 30 is visible, due to the perspective of the view. The visible diffuser section 34 as well as the outlet 42 of the channel 30 are substantially symmetrical with respect to a symmetry plane PS. A circumference 44 of the outlet 42 is arranged at the intersection of the outlet 42 of the channel 30 and the second surface 26. An outlet edge 45 is formed on the circumference 44, which comprises a blend 70. The blend 70 is of substantially convex shape. In other words, rather than having a sharp edge between an inner channel surface 36 of the channel 30 and the second surface 26, the outlet edge 45 comprises a rounded corner. The radius of the blend 70 may vary along the circumference 44. On the circumference 44, a bead 60 is arranged. The bead 60 does not extend over the full circumference 44, but only around a circumferential extension EC, here of approximately 120°. The circumferential extension EC describes the extent to which the bead protrudes around a center of gravity of the cross-section of the outlet 42, or of the circumference 44, respectively. In other embodiments, the circumferential extension EC may have a different value, such as e.g. 90°, 150°, 200°, 270°. The bead 60 has its center, and its maximum height, respectively, in an outlet zone 48, arranged at an upstream side 46 of the outlet 42. The term "upstream" refers to a main flow direction DF of a fluid flow FF, and therefore the upstream side 46 describes the part of the circumference 44 facing towards the origin of said fluid flow FF. In the present embodiment, the fluid flow FF comprises a hot gas HG in the form of a combustion gas. The bead 60 has its maximum bead height HB on the upstream side 46, and further extends along the circumference 44 towards a first and second circumferential end 62.1, 62.2, on each side with continuously decreasing bead height HB. In sections of the circumference 44 where the bead 60 is present, the blend 70 extends over the top end of the bead 60. Further, at the intersection of the bead 60 and the second surface 26, a further blend 72 of concave shape is present. In the shown embodiment, the shape of the circumference 44, and the outlet edge 45 and the bead 60, respectively, is that of a polygon, in particular a trapezoid, with four rounded corners. In alternative embodiments, other shapes are possible, such as rectangular, round, ellipsoid, polygonal or other shapes.

Alternatively or additionally, the circumferential extension EC may be defined by an overlap angle AOV, which describes the extent to which the bead protrudes circumferentially over a lateral channel extension 38. The lateral channel extension 38 may be defined as a projection of the channel 30, in particular the main section 33 of the channel 30, onto a plane defined by the second surface 26 of the wall shaped body 10. The bead 60 may extend on both circumferential ends 62.1, 62.2 over the lateral channel extension 38. The overlap angle AOV in this case is about 25°, on both sides of the channel 30. In other embodiments, the value for the overlap angle AOV may vary, on either side of the channel 30, and/or among different channels 30 of the same aerodynamic component 100. Through such overlap of the bead 60 over the channel 30, a reinforcement of the aerodynamic component 100, in particular of the outlet zone 48, can be achieved. Hence, the lateral channel extension 38 describes an area between the channel 30 (where a closed cross-section of the channel 30 exists, or in other words: where the channel is still entirely within the wall shaped component 10, respectively) and the second surface 26. This area tends to be weak, due to its relatively small material thickness. The lateral channel extension 38 (and the overlap angle AOV, respectively) may be delimited by lateral channel intersection points 39, which are the projections of the most lateral points of the main section 33 of the channel 30, at the intersection to the diffuser section 34.

Further, it can be seen in FIG. 1 that the main section 33 of the channel 30 does not extend symmetrically with respect to the symmetry plane PS of the diffuser section 34, but rather at a channel angle ANC, which in this case is about 20°. The channel angle ANC extends between the symmetry plane PS and a channel axis AC of the channel 30, in particular of the main section 33. The channel angle ANC may vary, e.g. between 0° and 30°, among different embodiments and/or among different channels within one embodiment.

Turning to **FIG. 2****,** a cross-sectional view of the first embodiment, cut through the wall-shaped body 10 in the region of the channel 30, is shown. The channel 30 extends from a first surface 22 on a first side 20 of the wall-shaped body 10, to the outlet 42, arranged on the second surface 26 on the second side 24 of the wall-shaped body 10. Starting from the inlet 32, the channel 30 comprises a main section 33 and subsequently a diffuser section 34, which connects to the outlet 42. A cooling fluid FC can flow from the inlet 32 on the first side 20 through the channel 30 to the outlet 42 on the second side 24. The channel 30 is a cooling channel. The second surface 26 is exposed to hot gas HG. It is further visible that the bead 60 and the wall-shaped body 10 form - at least in the area of the outlet zone 48 - a substantially constant bead thickness TB, ensuring a minimum material thickness and thus increased stability of the outlet zone 48. The bead 60 is arranged at a bead angle A with respect to the second surface 26, and thus rises at a substantially linear slope along a bead length LB towards a bead height HB.

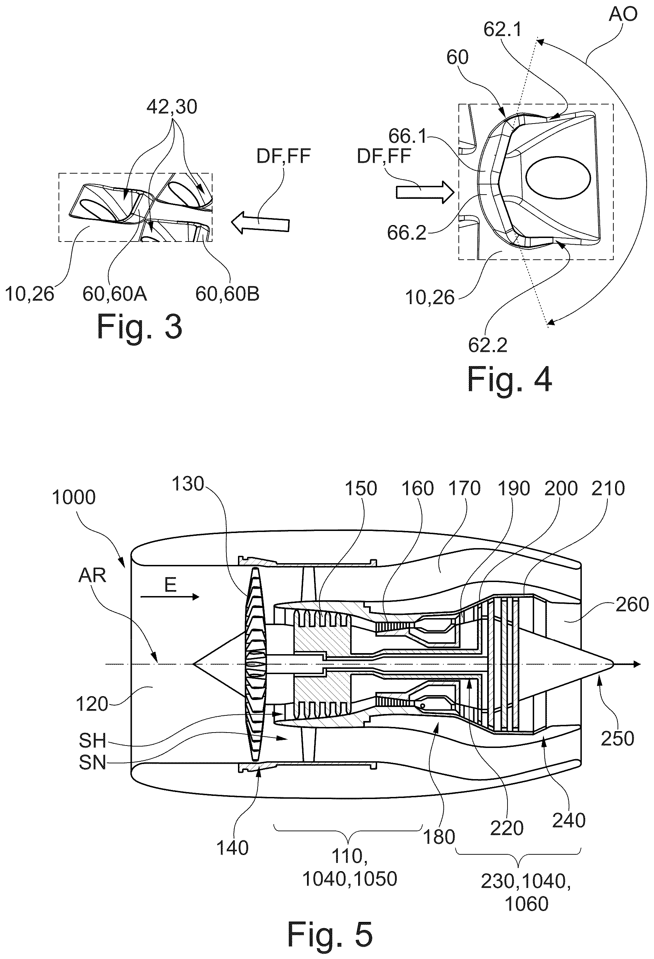

**FIG. 3** shows a larger section of the first embodiment, in a view onto the second surface 26 of the wall-shaped component 10. A plurality of outlets 42, each of a different channel 30, is visible. The outlets 42 are arranged in curved rows. In optional embodiments it is possible, such as shown here, that different types of beads 60 are arranged on the same aerodynamic component 100. For example, as shown here, a first subset of outlets 42 may comprise a first bead type 60A, and a second subset of outlets 42 may comprise a second bead type 60B. In the present example, the first bead type 60A has a smaller bead length LB (thus forming a shorter ramp) than the second bead type 60B.

**FIG. 4** shows an excerpt view of a second embodiment of an aerodynamic component 100 in the form of a combustor tile 102. The embodiment shown differs from the first embodiment in that it comprises differently shaped beads 60. As can be seen in further detail, the bead 60 comprises a first straight bead section 66.1 and a second straight bead section 66.2, each protruding from the center of the bead 60 along the circumference 44 and arranged at an opening angle AO to each other, resulting in a bead comprising a V-shape.

**FIG. 5** shows schematically and in a sectional view a gas turbine 1000 in the form of a gas turbine engine. Engine components are arranged one behind the other along a longitudinal axis of the gas turbine engine 1000, which in this case corresponds to the axis of rotation AR. At the inlet 120, air is sucked in along an inlet direction E by means of a fan 130. This fan 130 is arranged in a fan casing 140 and is driven by a low-pressure turbine 210 of a turbine 230 via a rotor shaft 220. The turbine 230 comprises at least one rotor stage 1040 in the form of a turbine stage 1060, and is connected to a compressor 110, which has at least one high-pressure compressor 160 and optionally, as shown here, also a low-pressure compressor 150 and/or an intermediate-pressure compressor. The compressor 110, or the high-pressure compressor 160 and the low-pressure compressor 150, has at least one rotor stage 1040 in the form of a compressor stage 1050. To generate thrust, the fan 130 supplies the low-pressure compressor 150 and the high-pressure compressor 160, as well as a bypass duct 170, with air. This creates a main flow SH that runs through the core of the gas turbine 1000, and a bypass flow SN that runs through the bypass channel 170. The air compressed in the compressors 150, 160 is mixed with fuel and combusted in the combustion chamber 180. The hot gas produced is used to drive the turbine 230, which may comprise at least a high-pressure turbine 190, and possibly, as shown here, an intermediate-pressure turbine 200 and possibly another low-pressure turbine 210. The energy released during combustion is used by the turbine 230 to drive the compressor 110 and the fan 130, in order to then generate the required thrust via the air conveyed into the bypass channel 170. Both the bypass flow SN from the bypass channel 170 and the main flow SH flow out through an outlet 260. The outlet 260 usually has a thrust nozzle with a centrally arranged outlet cone 250. To reduce noise, a mixer is located in the area of the outlet as part of a mixer group 240. The special contour of the mixer deflects the main flow from the core flow and the secondary flow from the bypass channel 170 of the gas turbine 1000 and mixes them in such a way that the resulting turbulence reduces the audible noise level. The proposed solution can also be applied to gas turbines with different designs, for example to any type of gas turbine engine, such as an open-rotor or turboprop engine or a geared turbofan, or to stationary gas turbines or other rotating machines. One or more aerodynamic components according to the concept of the disclosure may e.g. be arranged in the form of a combustor tile 102 in the combustion chamber 180, or in the form of an aerofoil or another component exposed to hot gas, e.g. in the turbine 230, in particular in the high-pressure turbine 190.

### List of reference signs:

- 10: wall-shaped body
- 20: first side of the wall-shaped body
- 22: first surface of the wall-shaped body
- 24: second side of the wall-shaped body
- 26: second surface of the wall-shaped body
- 30: channel, channel extending through the wall-shaped body
- 32: inlet, inlet of the channel
- 33: main section of the channel
- 34: diffuser section of the channel
- 36: inner channel surface
- 38: lateral channel extension
- 39: lateral channel intersection point
- 42: outlet, outlet of the channel
- 44: circumference of the outlet
- 45: outlet edge
- 46: upstream side of the outlet
- 48: outlet zone
- 60: bead
- 60A, 60B: first, second bead type
- 62: circumferential end of the bead
- 62.1, 62.2: first, second circumferential end
- 66: straight bead section
- 66.1, 66.2: first, second straight bead section
- 70: blend, blended edge, convex blend
- 72: further blend, concave blend
- 100: aerodynamic component
- 102: combustor tile
- 110: compressor
- 120: inlet
- 130: fan
- 140: fan casing
- 150: low-pressure compressor
- 160: high-pressure compressor
- 170: bypass duct
- 180: combustion chamber
- 190: high-pressure turbine
- 200: intermediate-pressure turbine
- 210: low-pressure turbine
- 220: rotor shaft
- 230: turbine
- 240: mixer group
- 250: outlet cone
- 260: outlet
- 1000: gas turbine
- 1040: rotor stage
- 1050: compressor stage
- 1060: turbine stage
- A: bead angle
- AC: channel axis
- ANC: channel angle
- AR: axis of rotation
- AO: opening angle
- AOV: overlap angle
- DF: main flow direction
- E: inlet direction
- EC: circumferential extension
- FC: cooling fluid
- FF: fluid flow
- HB: bead height
- HG: hot gas
- LB: bead length
- PS: symmetry plane
- SH: main flow
- SN: bypass flow
- TB: bead thickness

## Claims

1. An aerodynamic component (100) for a gas turbine (1000), the aerodynamic component (100) comprising:
a wall-shaped body (10) with a first surface (22) on a first side (20) of the wall-shaped body (10), and a second surface (26) on a second side (24) of the wall-shaped body (10), wherein the second side (24) is opposite of the first side (20);
wherein the wall-shaped body (10) comprises at least one channel (30) that extends from an inlet (32) at the first surface (22) to an outlet (42) at the second surface (26); and
a bead (60) extends at least partially around a circumference (44) of the outlet (42), the bead (60) protruding away from the second surface (26).

2. The aerodynamic component (100) of claim 1, wherein the second surface (26) is configured to be exposed to a fluid flow (FF) with a main flow direction (DF), wherein the bead (60) is arranged on an upstream side (46) of the outlet (42), the upstream side (46) being located upstream with respect to the main flow direction (DF).

3. The aerodynamic component (100) of claim 1 or 2, wherein the bead (60) has a bead height (HB) in a range from 0.05 mm to 0.8 mm, preferably from 0.1 mm to 0.6 mm, more preferably from 0. 25 mm to 0.35 mm, and/or wherein the bead (60) has a bead thickness (TB) in a range from 0.1 mm to 1.2 mm, preferably from 0.2 mm to 0.8 mm, more preferably from 0.55 mm to 0. 65 mm.

4. The aerodynamic component (100) of any preceding claim, wherein the outlet (42) and/or a diffuser section (34) of the channel (30) is symmetrical with respect to a symmetry plane (PS), wherein in particular a main section (33) of the channel (30) is arranged at a channel angle (ANC) with respect to the symmetry plane (PS).

5. The aerodynamic component (100) of any preceding claim, wherein the bead (60) comprises along its circumferential extension (EC) at least one, preferably two, three, four, five, six, or seven, straight sections (66, 66.1, 66.2).

6. The aerodynamic component (100) of any preceding claim, wherein the bead (60) has a bead height (HB) perpendicular to the second surface (26), wherein the bead height (HB) is gradually decreasing, in particular to zero, towards one or both circumferential ends (62, 62.1, 62.2) of the bead (60).

7. The aerodynamic component (100) of any preceding claim, wherein the bead has a bead length (LB), in particular in the outlet zone (48), in the range from 0.1 mm to 1.8 mm, preferably from 0.2 mm to 1.5 mm, more preferably from 0.4 mm to 1.2 mm.

8. The aerodynamic component (100) of any preceding claim, wherein the bead (60) has a circumferential extension (EC), in particular in the range from 70° to 280°, preferably 90° to 150°, more preferably 110° to 130°.

9. The aerodynamic component (100) of any preceding claim, wherein the bead (60) extends circumferentially beyond a lateral channel extension (38) over an overlap angle (AOV), wherein the overlap angle (AOV) may be in the range from 5° to 45°, preferably 10° to 40°, more preferably between 25° and 35°.

10. The aerodynamic component (100) of any preceding claim, wherein the bead (60) has a blended edge (70).

11. The aerodynamic component (100) of any preceding claim, wherein the bead (60) comprises at its upstream side (46) a first straight bead section (66.1) and a second straight bead section (66.2) that are arranged at an opening angle (AO) in the range from 110° to 200°, preferably 130° to 180°, more preferably 150° to 160°.

12. The aerodynamic component (100) of any preceding claim, wherein the component is manufactured by an additive manufacturing process.

13. The aerodynamic component (100) of any preceding claim, wherein the second surface (26) is configured to be exposed to hot gases (HG), in particular combustion gases, and/or the first surface (22) is configured to be exposed to a cooling fluid (FC), wherein the at least one channel (30) is a cooling channel.

14. The aerodynamic component (100) of claim 13, wherein the component is a combustor tile (102), a heat shield, an aerofoil, a vane, a liner, and/or a turbine blade, or a part thereof.

15. A gas turbine (1000) including an aerodynamic component (100) of any preceding claim.
